# EUROPEAN PATENT APPLICATION

(11) **EP 4 631 847 A1**
(43) Date of publication of application: **15.10.2025**
(21) Application number: 24315155.2
(22) Date of filing: 11.04.2024
(51) Int. Cl.: B63B 39/03

(54) **FLOATING WIND TURBINE PLATFORM WITH BALLAST DISTRIBUTION SYSTEM**

(71) Applicant: Technip Energies France, 92741 Nanterre Cedex (FR)
(72) Inventor: Malek, Sami, 92741 Nanterre Cedex (FR)
(74) Representative: Edson, Russell Gregory

(57) **Abstract**

A floating wind turbine platform is disclosed. The floating wind turbine platform may include a floatable structure having multiple semisubmersible columns: The semisubmersible columns may be interconnected by pontoons, at least some of which may contain a ballast. The floating wind turbine platform may also include a ballast distribution system having a sensor that is usable to detect an inclination of the floatable structure in a body of water. The ballast distribution system can balance the floatable structure in response to a signal from the sensor by operating a pump to distribute the ballast within the pontoons. Distributing the ballast within the pontoons may include selectively adjusting a position of the ballast contained within the internal volume of at least one of the pontoons, or transferring at least some of the ballast between the internal volumes of the pontoons.

## Description

### Technical Field

The present disclosure relates generally to floating offshore platforms such as used to support offshore wind turbines, and more particularly although not necessarily exclusively, to an offshore floating wind turbine platform using ballast distribution for platform leveling.

### Background

Floating offshore platforms are used for a variety of purposes. A wind turbine, for example, can be mounted to a floating wind turbine platform and deployed into a body of water to produce electrical energy from wind. Offshore locations are often desirable sources of wind power due to a lack of obstructions that are present on land. Locating wind turbines offshore also desirably decreases their visibility and conserves land resources as compared with land-based wind farms.

### Summary

Example No. 1 is a floating wind turbine platform that includes a floatable structure deployable in a body of water. The floatable structure includes one or more semisubmersible columns and a plurality of pontoons providing buoyancy to the floatable structure. Each of the pontoons defines an internal volume for receiving a ballast. The floating wind turbine platform also includes a ballast distribution system. The ballast distribution system includes fluid control members that are controllable for directing a flow of the ballast within the pontoons, a sensor for generating a signal responsive to an inclination of the floatable structure, and a controller in communication with the fluid control members to selectively redistribute the ballast among the pontoons in response to the signal.

Example No. 2 is Example No. 1, wherein the floatable structure comprises a triangular-shaped platform including three of the semisubmersible columns interconnected by the pontoons, and each semisubmersible column defines a vertex of the triangular-shaped platform.

Example No. 3 is Example No. 1, wherein the one or more semisubmersible columns includes a central column having a plurality of the pontoons radially extending therefrom.

Example No. 4 is the Examples of any of the preceding paragraphs in this Summary, wherein the controller redistributes the ballast from one of the pontoons to one or more other of the pontoons in response to the signal from the sensor.

Example No. 5 is Example No. 4, further comprising one or more bypass conduits for bypassing the one or more semisubmersible columns when transferring the ballast between the pontoons.

Example No. 6 is any of Example No. 1 to Example No. 3, wherein at least one of the pontoons comprises spaced apart ballast compartments, and wherein the ballast distribution system redistributes the ballast among the spaced apart ballast compartments in response to the signal from the sensor.

Example No. 7 is Example No. 6, further comprising a ballast transfer conduit fluidly coupling the spaced apart ballast compartments within one of the pontoons.

Example No. 8 is Example No. 6, wherein each pontoon comprises two or more of the spaced apart ballast compartments, and wherein the ballast distribution system independently redistributes the ballast among the ballast compartments of each of the pontoons in response to the signal from the sensor.

Example No. 9 is Example No. 6, wherein the controller selectively redistributes the ballast from one of the pontoons to one or more other of the pontoons in response to the signal from the sensor, in combination with redistributing the ballast among the spaced apart ballast compartments of each pontoon.

Example No. 10 is any of Example No. 1 to Example No. 3, wherein the controller determines a time-averaged tilt from the signal and redistributes the ballast in response to the time-averaged tilt.

Example No. 11 is any of Example No. 1 to Example No. 3, wherein the controller dynamically redistributes the ballast to maintain the floatable structure within a predefined range of tilt.

Example No. 12 is a method of balancing a floating platform deployed in a body of water on pontoons providing buoyancy to the floating platform. The method includes generating, by a sensor, a signal responsive to an inclination of the floating platform. The method also includes selectively redistributing a ballast among internal volumes defined by the pontoons to maintain the floating platform within a predefined range of inclination.

Example No. 13 is Example No. 12, wherein redistributing the ballast among internal volumes defined by the pontoons includes redistributing the ballast from one of the pontoons to one or more other of the pontoons in response to the signal from the sensor.

Example No. 14 is Example No. 13, further comprising bypassing one or more semisubmersible columns to which the pontoons are mechanically coupled when redistributing the ballast from one of the pontoons to one or more other of the pontoons.

Example No. 15 is Example No. 12, wherein redistributing the ballast among the internal volumes defined by the pontoons includes transferring ballast between spaced apart ballast compartments within one of the pontoons.

Example No. 16 is Example No. 15, wherein all of the pontoons include the spaced apart ballast compartments, and wherein redistributing the ballast among the internal volumes defined by the pontoons includes independently redistributing the ballast among the ballast compartments of each of the pontoons in response to the signal from the sensor.

Example No. 17 is Example No. 15, wherein redistributing the ballast among the internal volumes defined by the pontoons includes redistributing the ballast from one of the pontoons to one or more other of the pontoons in combination with redistributing the ballast among the spaced apart ballast compartments of each pontoon.

Example No. 18 is any of Example No. 12 to Example No. 17, further comprising determining a time-averaged tilt from the signal from the sensor and redistributing the ballast in response to the time-averaged tilt.

Example No. 19 is any of Example No. 12 to Example No. 17, wherein selectively redistributing the ballast includes dynamically redistributing the ballast to maintain the floating platform within a predefined range of tilt.

Example No. 20 is a ballast distribution system for a floating platform. The ballast distribution system includes a pump for driving a flow of ballast within pontoons of the floating platform and one or more fluid control members fluidly coupled to the pump and controllable for directing the flow of the ballast within the floating platform. The ballast distribution system also includes a sensor securable to the floating platform for generating a signal responsive to an inclination of the floating platform in a body of water and a controller in communication with the fluid control members to selectively redistribute the ballast among the pontoons in response to the signal.

### Brief Description of the Drawings

FIG. 1 is a schematic, elevation view of a floating wind turbine according to one example configuration.
FIG. 2 is a perspective view of a floating wind turbine platform with a ballast distribution system that dynamically redistributes ballast to different locations within a pontoon.
FIG. 3 is a schematic diagram of the ballast distribution system of the floating wind turbine platform of FIG. 2 according to one example configuration.
FIG. 3A is a schematic diagram of another example configuration of a pontoon with ballast compartments component of the ballast distribution system of FIG. 3.
FIG. 3B is a schematic diagram of yet another example configuration of a pontoon with ballast compartments component of the ballast distribution system of FIG. 3.
FIG. 4 is a perspective view of another floating wind turbine platform with a ballast distribution system that dynamically redistributes ballast from one pontoon to one or more other pontoons.
FIG. 5 is a schematic diagram of the ballast distribution system of the floating wind turbine platform of FIG. 4 according to an example configuration.
FIG. 6 is an elevation view of the floating wind turbine of FIG. 1 schematically depicting the floating wind turbine platform at a level orientation within a body of water.
FIG. 7 is an elevation view schematically depicting the floating wind turbine platform of FIG. 1 at an inclined orientation within the body of water.
FIG. 8 is a perspective view of a floating wind turbine platform according to yet another example configuration having a central column and pontoons extending radially outwardly from the central column in a spoke-like pattern.
FIG. 9 is an enlarged, perspective view of the platform of FIG. 8.
FIG. 10 is a flow chart of a method for balancing a floating wind turbine platform according to an example configuration.

### Detailed Description

The present disclosure relates to a floating platform and to a ballast distribution system for selectively redistributing ballast among pontoons of the floating platform. Aspects of the disclosure are illustrated in the context of a floating wind turbine platform, but may also be applied to other floating offshore platforms. A floating wind turbine according to the disclosure may be installed in a body of water, such as in the ocean offshore. The floating wind turbine platform is a floatable structure that supports a turbine for generating electrical power from wind. The platform comprises one or more semisubmersible columns and pontoons that provide buoyancy for the floatable structure. The turbine may be supported on a tower that extends upwardly from one of the columns to position the turbine in the wind. The weighting of the platform in any given configuration, and the changing dynamics of water and wind movement acting on the floatable structure, can cause movement or tilting of the platform with respect to a horizontal plane. In the present context, a floatable structure that is tilted with respect to the horizontal plane may also be said to have an inclination with respect to horizontal. The disclosed ballast distribution system may therefore be employed to balance the floatable structure by sensing tilt and selectively redistributing a ballast among the pontoons to maintain a desired inclination.

Any of a variety of platform configurations may be constructed having an arrangement of one or more semisubmersible columns and pontoons. In some examples, the floatable structure may have a generally polygonal shape, with a column located at each vertex of the polygon. In one example, the floatable structure may be triangular with three columns defining the vertices and pontoons interconnecting the columns to define the legs. Another example includes a column at or near the center of the platform. The wind turbine tower may be attached to and extend upwardly from one of the semisubmersible columns.

In any given configuration, the pontoons define internal volumes for receiving the ballast, such as water or other suitable fluid. An unoccupied portion of the internal volumes may also contribute to the buoyancy of the pontoons. The ballast may be selectively redistributed among the pontoons for balancing the platform to adjust for changing dynamic conditions. In some examples, ballast may be redistributed from one pontoon to one or more of the other pontoons. In other examples, each pontoon may have multiple spaced apart ballast compartments so that ballast may be redistributed among the ballast compartments in any particular pontoon. The submersible columns in some examples may also provide some buoyancy in addition to the buoyancy provided by the pontoons, in which case ballast may also be redistributed among the columns. In other embodiments, the ballast may be redistributed among the pontoons and not the columns, and any flow of ballast from one pontoon to another may bypass the columns.

The ballast distribution system includes one or more sensors that generates a signal responsive to an inclination of the floatable structure. For example, changing dynamics of water and wind forces acting on the floatable structure may cause an inclination of the floatable structure outside a preferred range of tilt. The ballast distribution system can include a controller with control logic for balancing the floatable structure by selectively redistributing the ballast in response to a signal from the sensor(s). The flow may be powered by a pump, and the controller may control flow through any suitable valving arrangement that allows controlled flow of ballast from one location to another. The controller may use signals (e.g., inclination readings) from the tilt sensor to control the position of the ballast within an individual pontoon, or the distribution of ballast among the collective pontoons .

In an example, the ballast distribution system may operate to maintain the floatable structure within a predefined range of inclination angle, or to correct the balancing of a platform that has tilted outside the predefined range. For example, when pontoons include spaced apart ballast compartments, balancing of the floatable platform may be accomplished by selectively transferring some amount of the ballast from one of the ballast compartments to the other. A ballast transfer conduit may create a ballast transfer pathway between the ballast compartments for this purpose, and at least one pump in fluid communication with the ballast transfer conduit may be operated by the controller to transfer ballast between the ballast compartments. Controllable ballast transfer valves may also be provided and used in conjunction with the at least one pump to control the transfer of ballast between the ballast compartments.

In other examples, where at least some of the pontoons of the deployed floatable structure are in fluid communication with each other, the ballast distribution system may balance an inclination of the floatable structure by causing ballast to be selectively transferred between the pontoons. For example, the pontoons may be interconnected by one or more ballast transfer ducts/conduits via which ballast may be transferred between the pontoons in a closed loop. At least one pump in fluid communication with the internal volumes of the pontoons may be operated according to signals from the controller to selectively transfer ballast between the pontoons. Controllable ballast transfer valves may also be provided and used in conjunction with the at least one pump to control the transfer of ballast between the pontoons.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

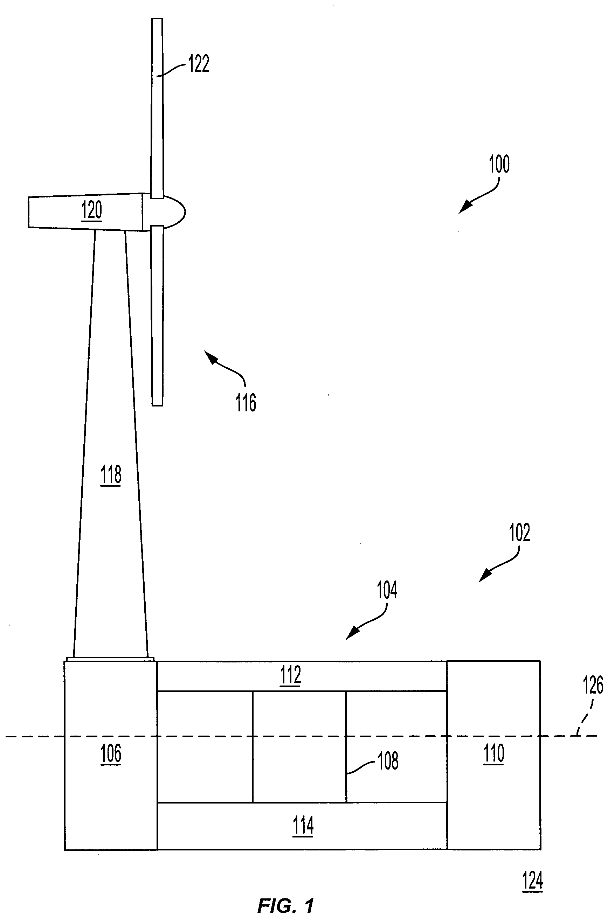

FIG. 1 is a schematic, elevation view of a floating wind turbine 100 according to an example configuration. As shown, the floating wind turbine 100 includes a floating wind turbine platform 102 having a floatable structure 104. The floatable structure 104 in this example is a platform of generally triangular shape, with three semisubmersible columns 106, 108, 110 each defining a vertex of the platform. Other floatable structure examples may have a different number of semisubmersible columns or a different arrangement of semisubmersible columns.

The semisubmersible columns 106, 108, 110 may be interconnected by connecting members. In the particular example of FIG. 1, pairs of upper connecting members 112 and lower connecting members 114 interconnect the semisubmersible columns 106, 108, 110. The lower connecting members 114 in this example are pontoons. The pontoons 114 can each define an internal volume that can contribute to the buoyancy to the floatable structure 104. A ballast, such as water, may be contained within at least some of the internal volumes for providing stability or preferential weighting of the floating wind turbine platform 102. The ballast may be distributable within or between the pontoons 114 as further described below, such as for dynamically adjusting the preferential weighting in response to a measured tilt angle.

A wind turbine 116 may be affixed to the floatable structure 104, as shown. In this example, the wind turbine 116 includes an upwardly-extending tower 118, a nacelle 120 enclosing a gearbox and a generator, and a rotor blade 122. The wind turbine tower 118 is securely affixed to the top of a first column 106 in the example of FIG. 1, but other wind turbine locations and affixation techniques relative to the floatable structure 104 are possible in other examples.

As represented in FIG. 1, the floatable structure 104 has been deployed to a body of water 124 (e.g., the ocean), the surface 126 of which is indicated by the dashed line. The location of the surface 126 of the body of water 124 relative to the semisubmersible columns 106, 108, 110 represents a typical submerged depth of the floatable structure 104. As shown, the pontoons 114 and the portion of the semisubmersible columns 106, 108, 110 residing below the dashed line may be submerged at the typical submerged depth of the floatable structure 104. As also represented in FIG. 1, the floatable structure 104 has a substantially level floating orientation in the body of water 124. As such, there is no inclination of the semisubmersible columns 106, 108, 110 or the wind turbine tower 118.

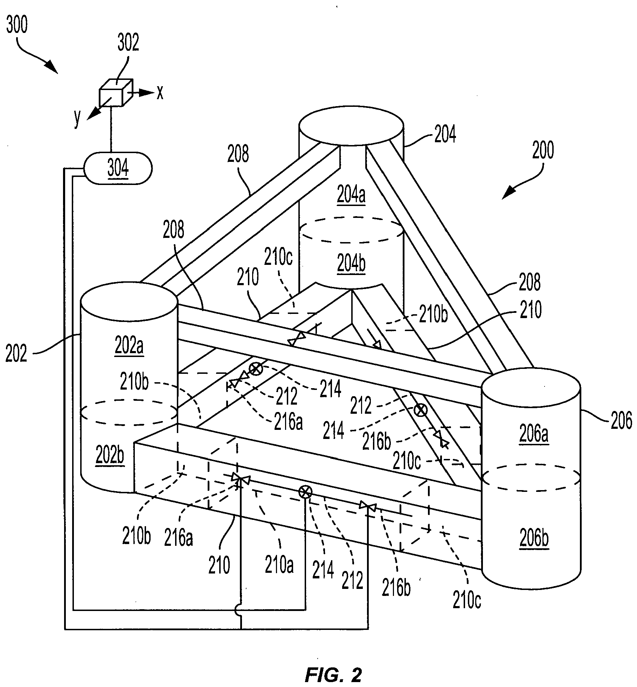

FIG. 2 is a perspective view of a floating wind turbine platform 200 wherein balancing can be achieved, at least in part, by dynamically redistributing ballast among ballast compartments at different locations within a given pontoon. As shown, the floating wind turbine platform 200 can include a floatable structure 200a and three semisubmersible columns 202, 204, 206. In this example, the floatable structure 200a includes a generally triangular-shaped platform, and the three semisubmersible columns 202, 204, 206 define (are located at) the vertices of the generally triangular shaped platform.

The semisubmersible columns 202, 204, 206 of the floatable structure 200a can be interconnected. Interconnection of the semisubmersible columns 202, 204, 206 can be accomplished, for example, using various types of solid or hollow connecting members provided in various quantities. In some examples, a single connecting member may extend between each of the semisubmersible columns 202, 204, 206. In other examples, an array of connecting members may extend between each of the semisubmersible columns 202, 204, 206. In some examples, the connecting members may form a truss structure or may be otherwise arranged between the semisubmersible columns 202, 204, 206. In the particular example of the floating wind turbine platform 200 illustrated in FIG. 2, the semisubmersible columns 202, 204, 206 are rigidly interconnected by upper connecting members 208 and lower, pontoons 210. The upper connecting members 208 and the pontoons 210 may be rigid elements. For example, the upper connecting members 208 and the pontoons 210 may be lengths of steel tubing of similar or dissimilar cross-sectional dimensions, which can be affixed to the semisubmersible columns by welding or otherwise. While the upper connecting members 208 and the pontoons 210 are shown to have a generally square or rectangular cross-sectional shape in the example of FIG. 2, other cross-sectional shapes are also possible. For example, one or both of the upper connecting members 208 and the pontoons 210 may have a round cross-sectional shape.

Each pontoon 210 can define an internal volume indicated at 210a, and the plurality of pontoons 210 can collectively define a larger internal volume. The internal volumes 210a of the pontoons 210 can allow the pontoons 210 to provide at least some buoyancy to the floatable structure 200a when the floatable structure 200a is deployed to a body of water. The internal volumes 210a of the pontoons 210 can also contain or receive a ballast, such as within ballast compartments that are located within the internal volumes 210a of the pontoons 210. The ballast can be a distributable ballast such as, but not limited to, water.

The semisubmersible columns 202, 204, 206 of the floatable structure 200a can be of various cross-sectional shape. For example, the semisubmersible columns 202, 204, 206 may be generally polygonal, or generally cylindrical as shown. The semisubmersible columns 202, 204, 206 can be elongate, having a length/height dimension that is greater than a cross-sectional dimension(s). Each of the semisubmersible columns 202, 204, 206 may be hollow or substantially hollow and may define an internal ballast volume 202a, 204a, 206a for containing ballast 202b, 204b, 206b, which may be water ballast. A given internal ballast volume 202a, 204a, 206a may include the entire hollow interior of the respective semisubmersible column 202, 204, 206, or only a portion thereof.

In the floatable structure 200a example of FIG. 2, the internal volumes 210a of the pontoons 210 may each be sealed volumes with no fluid communication therebetween. Likewise, the internal volumes 210a of the pontoons may have no fluid communication with the internal ballast volumes 202a, 204a, 206a of the semisubmersible columns 202, 204, 206.

At least one of the pontoons 210 includes two or more spaced apart ballast compartments 210b, 210c defining different portions of internal volume 210a of the respective pontoon 210. In this example, the first ballast compartment 210b is located at or near a first end of the pontoon 210 and the second ballast compartment 210c is located at or near an opposite, second end of the pontoon 210. In this manner, the ballast compartments 210b, 210c of a given pontoon 210 can also be located near the pair of the semisubmersible columns 202, 204, 206 that are interconnected by the pontoon 210. Although not expressly shown, each of the other pontoons may also include two or more spaced apart ballast compartments defining a portion of the internal volumes of the respective pontoons.

In some examples, each of the ballast compartments 210b, 210c of a given pontoon 210 can be defined, at least in part, by the interior walls of the connecting member forming the pontoon 210. In some examples, a pair of plates may also be located within the internal volume 210a of the pontoon 210 so as to form a seal with the interior walls of the pontoon 210 and thereby form complete ballast compartments 210b, 210c. For example, the plates of a given pontoon 210 may be welded to the interior walls of the pontoon 210 in a sealing manner. In other examples, each of the ballast compartments 210b, 210c of a given pontoon 210 can be an individual tank that is inserted into and secured within the internal volume 210a of the pontoon 210. For example, the tanks of a given pontoon 210 may be secured to the interior walls of the pontoon 210 by welding or another affixation technique.

Generally, a ballast control system according to the disclosure may include one or more pumps for generating fluid pressure to drive fluid flow of the ballast and other fluid control members like electronically-controllable valves and conduits for controlling the flow of ballast to different locations in the floatable structure. A ballast control system is not limited to any of the particular example configurations shown. In FIG. 2, a pontoon 210 having ballast compartments 210b, 210c may also have a ballast transfer conduit(s) 212 that is located within its internal volume 210a. The ballast transfer conduit(s) 212 may extend from the first ballast compartment 210b to the second ballast compartment 210c of the pontoon 210 to provide a ballast transfer pathway therebetween. At least one pump may be in fluid communication with the ballast transfer conduit(s) 212 of the pontoons 210.

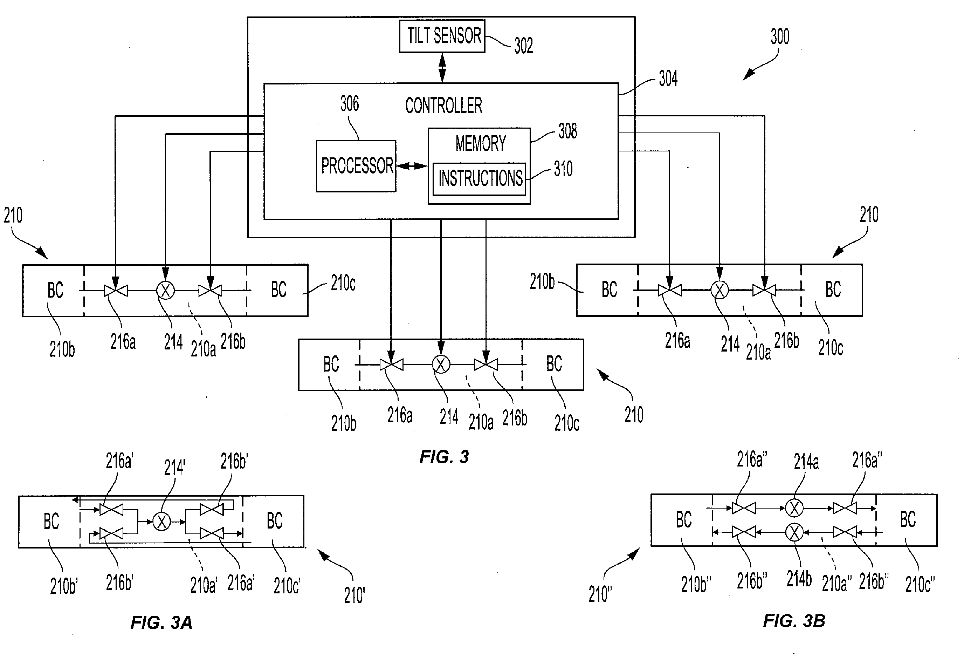

As illustrated in FIG. 2, the pontoons 210 having ballast compartments 210b, 210c may also have individual pumps 214 for transferring ballast. The individual pumps 214 may be located within the internal volumes 210a of the pontoons 210. For example, a pump 214 may be located in the ballast transfer pathway provided by each ballast transfer conduit 212. The pump 214 of a given pontoon 210 can be used to transfer ballast from the first ballast compartment 210b to the second ballast compartment 210c of the given pontoon 210, or vice versa, via the ballast transfer conduits. Various configurations of pumps, electronically-controllable valves, and conduits for controlling the flow of ballast within the pontoons 210 of a floating platform are presented in FIGS. 3-3B and described in more detail below.

In an additional, non-illustrated example, a single pump may be used to adjust the location of ballast within multiple pontoons 210. For example, a single pump can be placed in fluid communication with controllable ballast transfer valves associated with or located in multiple pontoons 210, such as the controllable ballast transfer valves 216a, 216b. The single pump can be operated to adjust the location of the ballast within the internal volume 210a of a selected pontoon 210 by transferring at least some of the ballast from the first ballast compartment 210b to the second ballast compartment 210c, or vice versa. The ability of the single pump to adjust the location of the ballast within the internal volume 210a of a selected pontoon 210 of the multiple pontoons 210 in such a manner can be enabled by the controllable directional valves, such as the controllable ballast transfer valves 216a, 216b. That is, activation or deactivation of particular ones of the controllable ballast transfer valves 216a, 216b is usable to select a particular pontoon 210 for a ballast adjustment and also to dictate a direction of ballast transfer within the particular pontoon 210. In some examples, a valve controller may be provided to control activation and deactivation of the controllable ballast transfer valves 216a, 216b.

A tilt sensor according to the disclosure is any combination of hardware and/or control logic (e.g., software or firmware) that is responsive to the tilt of the floatable platform and can provide feedback for the controller to selectively redistribute ballast. Thus, a tilt sensor may in some cases directly sense an inclination, but in other examples, could be used to infer inclination. For example, sensors positioned at different locations on a floatable platform may sense elevation and tilt may be inferred by comparing the different elevations at the different locations. Thus, the tilt sensor configurations discussed herein are provided merely by way of example and not by limitation.

FIG. 3 is a schematic diagram of a ballast distribution system 300 of the floating wind turbine platform of FIG. 2 according to one example configuration. As shown, the ballast distribution system 300 can include a sensor responsive to tilt, i.e., a "tilt sensor" 302, that is usable by a controller 304 to determine an inclination of the floatable structure 200a with respect to a reference plane, e.g., a horizontal reference plane normal to gravity. For example, the tilt sensor 302 may be usable by the controller 304 to detect an inclination of the semisubmersible columns 202, 204, 206 of the floatable structure 200a. The tilt sensor 302 may operate to detect an inclination of the floatable structure 200a along at least two axes, such as the X and Y axes indicated in FIG. 2. The tilt sensor 302 may be provided in various forms. For example, the tilt sensor 302 may be a gyroscope, an accelerometer, an inclinometer, or another combination of sensors or instruments that can be used to detect an inclination of the floatable structure 200a. The output of the tilt sensor 302 may be a signal that merely indicates the direction of an inclination of the floatable structure 200a, or a signal that indicates a direction and magnitude of an inclination of the floatable structure 200a. The signal may also indicate an average direction and magnitude of an inclination of the floatable structure 200a.

The controller 304 of the ballast distribution system 300 can be communicatively coupled to the tilt sensor 302 so as to receive signals output by the tilt sensor 302. The controller 304 may have a processor 306 and a memory 308. The memory 308 can include instructions 310 that are executable by the processor 306 for causing the processor 306 to perform operations, such as to analyze the signal from the tilt sensor 302 and to control the selective redistribution of ballast in response. An average inclination of the floatable structure 200a can be either directly measured by the tilt sensor 302 or calculated by the processor 306 based on continuous measurements from the tilt sensor 302. The processor 306 of the controller 304 can then perform an operation to balance the floatable structure 200a. For example, the processor 306 may balance the floatable structure 200a by causing a selective transfer of ballast between the ballast compartments 210b, 210c of at least one of the pontoons 210 of the floatable structure 200a, or a selective transfer of ballast between at least some of the pontoons 210 of the floatable structure 200a, as described above.

An inclination of the floatable structure 200a may cause one or more of the semisubmersible columns 202, 204, 206 of the floatable structure 200a to become submerged to a greater depth than one or more of the other semisubmersible columns 202, 204, 206. Thus, to balance the floatable structure 200a, the processor 306 of the controller 304 can cause ballast to be transferred from one or more ballast compartments 210b, 210c located near the semisubmersible column 202, 204, 206 having the greater submerged depth to one or more ballast compartments 210b, 210c located near the semisubmersible column 202, 204, 206 having the lesser submerged depth.

To selectively transfer ballast between the ballast compartments 210b, 210c of a given pontoon 210 of the floatable structure 200a according to the example of FIG. 2, the ballast distribution system 300 may operate the pump 214 in conjunction with one or more controllable ballast transfer valves. In the example of the ballast distribution system 300 of FIG. 3, each pontoon 210 is shown to include a first controllable ballast transfer valve 216a and a second controllable ballast transfer valve 216b located within its internal volume 210a. The controllable ballast transfer valves 216a, 216b can be directional valves. The first controllable ballast transfer valve 216a can be associated with the first ballast compartment 210b of the pontoon 210 and may be located in the ballast transfer pathway between the first ballast compartment 210b and the pump 214. Similarly, the second controllable ballast transfer valve 216b can be associated with the second ballast compartment 210c of the pontoon 210 and may be located in the ballast transfer pathway between the second ballast compartment 210c and the pump 214. In a given pontoon 210, the first controllable ballast transfer valve 216a and the second controllable ballast transfer valve 216b can be used in conjunction with the pump 214 to properly direct a transfer of ballast from one of the ballast compartments 210b, 210c to the other.

The pump 214 can be a reversible pump that is communicatively coupled to the controller 304 of the ballast distribution system 300. The pump 214 may be activatable in response to a signal from the processor 306 of the controller 304. The pump activation signal can also include pump rotation direction instructions that direct the pump 214 to transfer ballast from the first ballast compartment 210b to the second ballast compartment 210c, or vice versa.

Likewise, each of the controllable ballast transfer valves 216a, 216b can be communicatively coupled to the controller 304 of the ballast distribution system 300 and may be switchable between an open position and a closed position in response to a valve control signal from the processor 306 of the controller 304. Consequently, the controller 304 can operate the controllable ballast transfer valves 216a, 216b to either allow or prevent ballast transfer between the ballast compartments 210b, 210c. When the controllable ballast transfer valves 216a, 216b are directional valves, the controllable ballast transfer valves 216a, 216b may be switchable between, for example, a first direction open position, a second direction open position, and a closed position. Therefore, each of the controllable ballast transfer valves 216a, 216b in such an example may receive a valve control signal from the processor 306 of the controller 304 that causes the controllable ballast transfer valves 216a, 216b to open in a direction that matches the direction of intended ballast transfer between the ballast compartments 210b, 210c and the corresponding pumping direction of the pump 214.

FIG. 3A is a schematic diagram of another example configuration of a pontoon with ballast compartments component of the ballast distribution system 300 of FIG. 3. As shown in this example, the pontoon 210' may again include an internal volume 210a' within which resides at least a first ballast compartment 210b' and a second ballast compartment 210c'. Ballast may again be transferred from the first ballast compartment 210b' to the second ballast compartment 210c', or vice versa. The pontoon 210' includes a ballast transfer arrangement comprising a single pump 214' and cooperating pairs of controllable ballast transfer valves 216a', 216b'. Activation of the pump 214' and selective activation or deactivation of the pairs of controllable ballast transfer valves 216a', 216b' is usable to select which ballast compartment 210b', 210c' will receive ballast and from which ballast compartment 210b', 210c' the ballast will be extracted. For example, with both controllable ballast transfer valves 216b' closed and both controllable ballast transfer valves 216a' open, activation of the pump 214' can cause ballast to be transferred from the ballast compartment 210b' to the ballast compartment 210c'. Alternatively, with both controllable ballast transfer valves 216a' closed and both controllable ballast transfer valves 216b' open, activation of the pump 214' can cause ballast to be transferred from the ballast compartment 210c' to the ballast compartment 210b'.

FIG. 3B is a schematic diagram of another example configuration of a pontoon with ballast compartments component of the ballast distribution system 300 of FIG. 3. As shown in this example, the pontoon 210" may again include an internal volume 210a" within which resides at least a first ballast compartment 210b" and a second ballast compartment 210c". Ballast may again be transferred from the first ballast compartment 210b" to the second ballast compartment 210c", or vice versa. The pontoon 210" includes a ballast transfer arrangement comprising a first pump 214a, a second pump 214b, and cooperating pairs of controllable ballast transfer valves 216a", 216b". Selective activation of the pumps 214a, 214b and selective activation or deactivation of the pairs of controllable ballast transfer valves 216a", 216b" is usable to select which ballast compartment 210b", 210c" will receive ballast and from which ballast compartment 210b", 210c" the ballast will be extracted. For example, with both controllable ballast transfer valves 216a" open and one or both of the controllable ballast transfer valves 216b" closed, activation of the first pump 214a can cause ballast to be transferred from the ballast compartment 210b" to the ballast compartment 210c". Alternatively, with one or both of the controllable ballast transfer valves 216a" closed and both of the controllable ballast transfer valves 216b" open, activation of the second pump 214b can cause ballast to be transferred from the ballast compartment 210c" to the ballast compartment 210b".

In the ballast transfer pump and valve arrangements depicted in FIGS. 3A-3B, the pumps and the controllable ballast transfer valves may be operated and controlled in any manner described above relative to the pumps and the controllable ballast transfer valves of the pontoons 210 of the ballast distribution system 300 of FIG. 3. For example, the pump 214' of FIG. 3A or the pumps 214a, 214b of FIG. 3B may be activatable in response to a signal from the processor 306 of the controller 304 of the ballast distribution system 300. In some examples, the pump activation signal can include pump rotation direction instructions as described above. Likewise, the controllable ballast transfer valves 216a', 216b' of FIG. 3A or the controllable ballast transfer valves 216a", 216b" of FIG. 3B can be communicatively coupled to the controller 304 of the ballast distribution system 300 and may be switchable between an open position and a closed position in response to a valve control signal from the processor 306 of the controller 304.

In some examples, the pump and controllable ballast transfer valve arrangement of the pontoon 210' of FIG. 3A or the pontoon 210" of FIG. 3B may be substituted for the pump and valve arrangement of each of the pontoons 210 of FIG. 3. In other examples, the pump and controllable ballast transfer valve arrangements of the pontoons 210 of FIG. 3 may be comprised of different combinations of the pump and controllable ballast transfer valve arrangements shown in FIG. 3, FIG. 3A, and FIG. 3B.

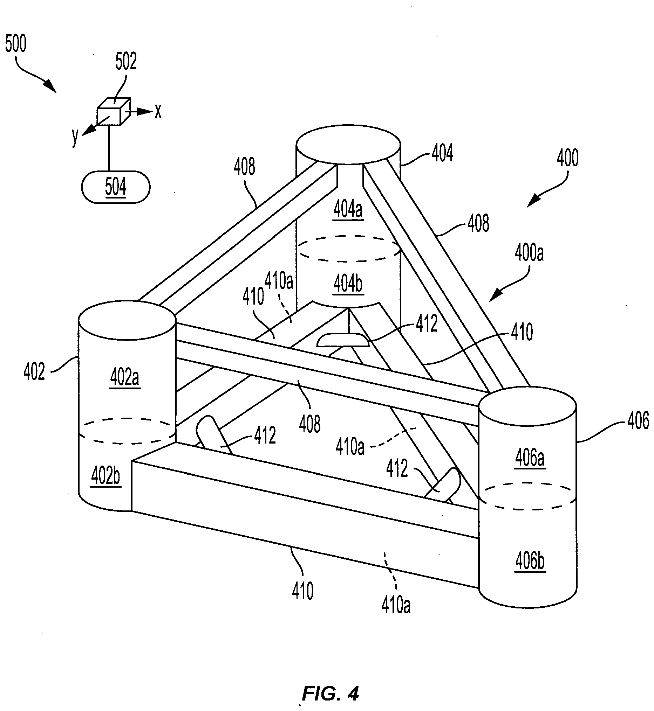

FIG. 4 is a perspective view of an alternative wind turbine platform 400 wherein rebalancing may be achieved by dynamically redistributing ballast from one pontoon to one or more other pontoons, instead of or in addition to redistributing ballast among spaced apart ballast compartments in a given pontoon as described in the example of FIG. 2. The design and construction of the floating wind turbine platform 400 may be similar to or the same as the floating wind turbine platform 200 of FIG. 2. For example, the floating wind turbine platform 400 may include a floatable structure 400a having a generally triangular-shaped platform with three semisubmersible columns 402, 404, 406 that define (are located at) the vertices of the generally triangular shaped platform. Other floatable structure designs having a different number or arrangement of semisubmersible columns are also possible.

The semisubmersible columns 402, 404, 406 of the floatable structure 400a can have any of the designs, shapes, dimensions, constructions, or other properties disclosed above relative to the semisubmersible columns 202, 204, 206 of the floatable structure 200a of FIG. 2. Each of the semisubmersible columns 402, 404, 406 may again have an internal ballast volume 402a, 404a, 406a that contains a ballast 402b, 404b, 406b. A baffle or a similar device may again be located within each internal ballast volume 402a, 404a, 406a to restrict or otherwise limit the movement of water therein.

The semisubmersible columns 402, 404, 406 can again be interconnected with cooperating pairs of upper connecting members 408 and lower connecting members embodied as pontoons 410. The pontoons 410 can define an internal volume 410a. The internal volume 410a of the pontoons 410 can allow the pontoons 410 to provide at least some buoyancy to the floatable structure 400a when the floatable structure 400a is deployed to a body of water. The internal volumes 410a of the pontoons 410 can also contain a ballast. The ballast can be a distributable ballast such as, but not limited to, water. Each of the upper connecting members 408 and each of the pontoons 410 may otherwise have any of the designs, shapes, constructions, or other properties disclosed above relative to the upper connecting members 208 and the pontoons 210 of the floatable structure 400a of FIG. 2. However, the pontoons 410 of the floatable structure 400a are in fluid communication with each other, to redistribute ballast from one pontoon to one or more other pontoons. This may be instead of or in addition to redistributing ballast spaced apart ballast compartments as described in FIG. 2.

In the case of the floatable structure 400a of the floating wind turbine platform 400 example of FIG. 4, ballast can be transferred between pontoons 410 - from one or more pontoons 410 to one or more other pontoons 410 - rather than between ballast compartments located at opposite ends of an individual pontoon. For example, an amount of ballast from within the pontoon 410 interconnected between semisubmersible column 402 and semisubmersible column 404, and ballast from within the pontoon 410 interconnected between semisubmersible column 402 and semisubmersible column 406, may be transferred to the pontoon 410 interconnected between semisubmersible column 404 and semisubmersible column 406 to balance the floatable structure 400a by causing a decrease in the submerged depth of semisubmersible column 402.

In some examples of the alternative wind turbine platform 400, the entire internal volume 410a of a given pontoon 410 can serve as a ballast compartment for containing ballast or transferring ballast between other pontoons 410. In other examples, a given pontoon 410 may include a ballast compartment or a plurality of ballast compartments within its internal volume 410a for containing ballast or transferring ballast between other pontoons 410. For example, a pontoon 410 may include a single ballast compartment located substantially equidistantly from each of the pair of semisubmersible columns 402, 404, 406 to which the pontoon 410 is connected, or may include a spaced apart pair of ballast compartments where each ballast compartment is located near one of the pair of semisubmersible columns 402, 404, 406 to which the pontoon 410 is connected. When a pontoon 410 of the wind turbine platform 400 includes a ballast compartment, the ballast compartment may be designed or constructed in any manner described above relative to the floating wind turbine platform 200 of FIG. 2.

In some examples, multiple ballast transfer ducts 412 may be provided to facilitate the transfer of ballast between the pontoons 410. In the particular example of FIG. 4, three ballast transfer ducts 412 are utilized. A first ballast transfer duct 412 creates a ballast passageway between the two pontoons 410 connected to semisubmersible column 402, a second ballast transfer duct 412 creates a ballast passageway between the two pontoons 410 connected to semisubmersible column 404, and a third ballast transfer duct 412 creates ballast passageway between the two pontoons 410 connected to semisubmersible column 406. As such, the internal volumes of all three pontoons 410 of the floatable structure 400a are in fluid communication with each other. In some examples, the ballast transfer ducts 412 may be in fluid communication with one or more ballast compartments located within the respective pontoons 410.

In an additional non-illustrated example, it may be possible for the pontoons 410 to pass through the semisubmersible columns 402, 404, 406 and for the ends of the pontoons to be joined in a sealed fashion within the internal volumes of the semisubmersible columns 402, 404, 406. A closed loop ballast pathway may thereby be formed through the pontoons 410. The ballast pathway through the pontoons 410 can be isolated from the internal volumes of the semisubmersible columns 402, 404, 406 in this manner, such that no ballast is shared between the pontoons 410 and the semisubmersible columns 402, 404, 406. The openings in the semisubmersible columns 402, 404, 406 required to accommodate passage of the pontoons 410 may be sealed, such as by welding the semisubmersible columns 402, 404, 406 to the pontoons 410.

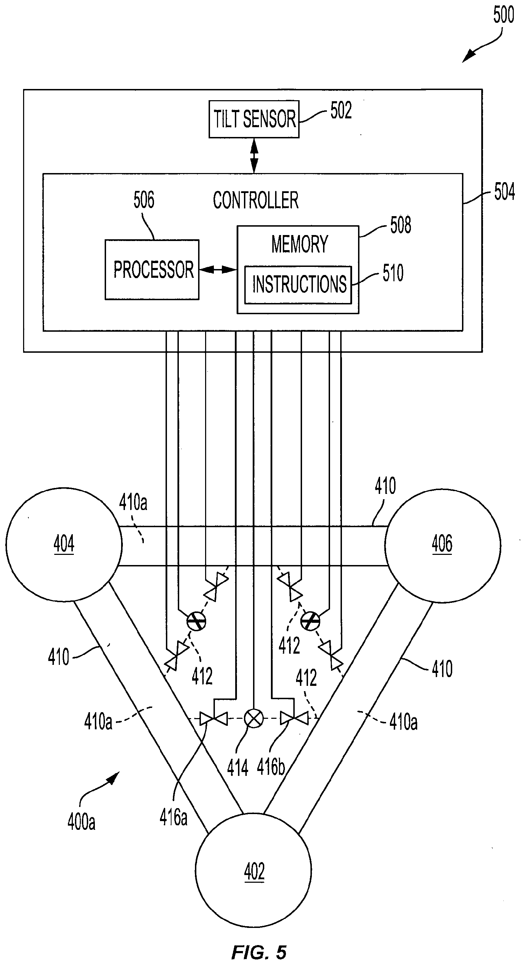

In the case of the floating wind turbine platform 400 example of FIG. 4, multiple ballast transfer pumps may also be provided to transfer ballast between the pontoons 410. For example, a ballast transfer pump can be located within the internal volume of each pontoon 410. Alternatively, and as is schematically illustrated in FIG. 5, a pump 414 can be placed in fluid communication with the internal volume of each ballast transfer duct 412. For example, a pump 414 may reside within each ballast transfer duct 412. The pumps 414 may be reversible pumps, which can provide a bidirectional transfer of ballast through the respective ballast transfer ducts 412 and between the various pontoons 410.

Multiple controllable ballast transfer valves 416a, 416b may also be provided to assist with the process of transferring ballast between the pontoons 410. The controllable ballast transfer valves 416a, 416b may be directional valves. For example, a first controllable ballast transfer valve 416a and a second controllable ballast transfer valve 416b can be located within each ballast transfer duct 412, as is schematically illustrated in FIG. 5. Each pair of controllable ballast transfer valves 416a, 416b can be used in conjunction with an associated pump 414 to selectively direct a transfer of ballast between the pontoons 410. Alternatively, a pump 414 can be located within the internal volume of each pontoon 410 along with a first controllable ballast transfer valve 416a and a second controllable ballast transfer valve 416b. In any case, selective operation of the pump(s) 414 and the controllable ballast transfer valves 416a, 416b can enable the transfer of a desired amount of the ballast between selected pontoons 410 in a chosen direction.

In an additional, non-illustrated example, a single pump may be used to transfer ballast between the internal volumes of the pontoons 410. For example, a single pump can be placed in fluid communication with multiple controllable ballast transfer valves, such as the controllable ballast transfer valves 416a, 416b. The controllable ballast transfer valves 416a, 416b can be associated with or located in the pontoons 410 or in the ballast transfer ducts 412. The controllable ballast transfer valves 416a, 416b may be directional valves. The ability of the single pump to transfer ballast between the pontoons 410 can be enabled by selective operation of the controllable ballast transfer valves 416a, 416b and the single pump 414. That is, activation or deactivation of particular ones of the controllable ballast transfer valves 416a, 416b may be used to select pontoons 410 between which a transfer of ballast can occur, and also to dictate a direction of ballast transfer between the pontoons 410.

One example of a closed loop ballast distribution system 500 that can be used to balance the floatable structure 400a of the floating wind turbine platform 400 is illustrated in FIG. 5. As shown, the ballast distribution system 500 can include a tilt sensor 502 that is positionable and usable to detect an inclination of the floatable structure 400a. For example, the tilt sensor 502 may be positionable and usable to detect an inclination of the semisubmersible columns 402, 404, 406 of the floatable structure 400a. The tilt sensor 502 may be a device/instrument that is constructed and operates in any manner described above relative to the floating wind turbine platform 400 of FIG. 2.

The ballast distribution system 500 can also include a controller 504. The controller 504 can be communicatively coupled to the tilt sensor 502 so as to receive output signals from the tilt sensor 502. The controller 504 may have a processor 506 and a memory 508. The memory 508 can include instructions 510 that are executable by the processor 506 for causing the processor 506 to perform operations. The operations can include balancing the floatable structure 400a based on signals received from the tilt sensor 502. More specifically, when the tilt sensor 502 detects an average inclination of the floatable structure 400a, the processor 506 of the controller 504 can activate the at least one pump 414 to cause ballast from one or more of the pontoons 410 of the floatable structure 400a to be transferred to one or more of the other pontoons 410.

As explained above, an inclination of the floatable structure 400a can cause one or more of the semisubmersible columns 402, 404, 406 to become submerged to a greater depth than one or more of the other semisubmersible columns 402, 404, 406. Thus, to balance the floatable structure 400a, the processor 506 of the controller 504 can cause ballast to be transferred from one or more of the pontoons 410 near the semisubmersible column 402, 404, 406 having the greater submerged depth to one or more of the pontoons 410 located near the semisubmersible column 402, 404, 406 having the lesser submerged depth. For example, in a case where an inclination of the floatable structure 400a causes semisubmersible column 402 thereof to be submerged to a greater depth than one or both of the other semisubmersible columns 404, 406, the processor 506 of the controller 504 may cause a transfer of ballast from the pontoon 410 interconnecting semisubmersible column 402 and semisubmersible column 404 and/or the pontoon 410 interconnecting semisubmersible column 402 and semisubmersible column 406, to the pontoon 410 interconnecting semisubmersible column 404 and semisubmersible column 406. In this manner, the weight of the ballast in the pontoon 410 interconnecting semisubmersible column 404 and semisubmersible column 406, which is the pontoon farthest away from semisubmersible column 402, can be increased. The increased weight of ballast in the pontoon 410 interconnecting semisubmersible column 404 and semisubmersible column 406 can cause return the floatable structure 400a back to a balanced position, which can also reduce the submerged depth of semisubmersible column 402.

Each pump 414 of the ballast distribution system 500 can be communicatively coupled to the controller 504 of the ballast distribution system 500 and may be independently activatable or otherwise operatable in response to a pump activation signal from the processor 506. To selectively transfer ballast between the pontoons 410 of the floatable structure 400a example of FIG. 4, the ballast distribution system 500 may transmit a pump activation signal that activates the pump(s) 414. The pump activation signal can also include pump rotation direction instructions, which cause one or more of the pumps 414 to transfer ballast in a desired direction through an associated ballast transfer duct(s) 412.

Likewise, each of the controllable ballast transfer valves 416a, 416b can be communicatively coupled to the controller 504 of the ballast distribution system 500 and may be switchable between an open position and a closed position in response to a valve control signal from the processor 506. The controller 504 can operate the controllable ballast transfer valves 416a, 416b to either allow or prevent ballast transfer between the pontoons 410 of the floatable structure 400a. It is also possible in some examples that the controllable ballast transfer valves 416a, 416b can be directional valves. In such an example, the controllable ballast transfer valves 416a, 416b may be switchable between, for example, a first direction open position, a second direction open position, and a closed position. Therefore, each of the controllable ballast transfer valves 416a, 416b in such an example may receive a valve control signal from the processor 506 that causes the controllable ballast transfer valves 416a, 416b to open in a direction that matches the direction of intended ballast transfer between the pontoons 410 and the corresponding pumping direction of the pump(s) 414.

In other examples, ballast transfer pump and valve arrangements like those depicted in FIGS. 3A-3B can be substituted for the pump 414 and controllable ballast transfer valve 416a, 416b arrangement of the ballast distribution system 500 of FIG. 5. In such examples, the pumps and the controllable ballast transfer valves may be operated and controlled in any manner described above relative to the pumps and the controllable ballast transfer valves of the pontoons 210', 210" of the ballast distribution system 300 of FIGS. 3A-3B. For example, a pump or the pumps of such examples may be activatable in response to a signal from the processor 506 of the controller 504 of the ballast distribution system 500. A pump activation signal from the controller 504 can include pump rotation direction instructions as described above. Likewise, the controllable ballast transfer valves of such examples can be communicatively coupled to the controller 504 of the ballast distribution system 500 and may be switchable between an open position and a closed position in response to a valve control signal from the processor 506 of the controller 504. In some examples, the pump and controllable ballast transfer valve arrangement of the pontoon 210' of FIG. 3A or the pontoon 210" of FIG. 3B may be substituted for the pump and valve arrangement of each of the ballast transfer ducts 412 of FIG. 5. In other examples, the pump and controllable ballast transfer valve arrangements of the ballast transfer ducts 412 of FIG. 5 may be comprised of different combinations of the pump and controllable ballast transfer valve arrangements shown in FIG. 3A and FIG. 3B.

Ballast distribution system examples may include a tilt sensor, and a controller having a processor and a memory. The memory can include instructions that are executable by the processor for causing the processor to perform operations to balance a floatable structure of a floating wind turbine platform. Initiation of such operations may be based on signals from the tilt sensor, which is communicatively coupled to the controller.

The components of the ballast distribution system may reside in various locations relative to the floating wind turbine platform. For example, the tilt sensor and the other components of the ballast distribution system may be installed within the nacelle of a wind turbine attached to the floating wind turbine platform, or may otherwise be installed within an enclosure(s) that is affixed to the wind turbine or to the floatable structure. In some examples, the tilt sensor and other components of the ballast distribution system may be powered by electrical energy produced by a generator of a wind turbine attached to the floatable structure. The tilt sensor and other components of the ballast distribution system may instead or additionally be powered by electrical energy produced by solar cells or other devices.

In some examples, the processor of the controller may be communicatively coupled to the memory by a bus. The processor can include one processor or multiple processors. Non-limiting examples of the processor include a Field-Programmable Gate Array (FPGA), an application specific integrated circuit (ASIC), a microprocessor, or any combination of these. The Instructions may be stored in the memory, along with other information such as ranges of acceptable floating wind turbine platform inclination or other parameters.

As described, the instructions are executable by the processor for causing the processor to perform various operations. In some examples, the instructions can include processor specific instructions generated by a compiler or an interpreter from code written in any suitable computer-programming language, such as C, C++, C#, Java, or Python. Through the instructions, the processor may operate to balance the floatable structure of a floating wind turbine platform.

The memory of the controller can include one memory device or multiple memory devices. The memory can be non-volatile and may include any type of memory device that retains stored information when powered off. Non-limiting examples of the memory include electrically erasable and programmable read-only memory (EEPROM), flash memory, or any other type of non-volatile memory. At least some of the memory device can include a non-transitory computer-readable medium from which the processor can read the instructions. A non-transitory computer-readable medium can include electronic, optical, magnetic, or other storage devices capable of providing the processor with the instructions or other program code. Non-limiting examples of a non-transitory computer-readable medium include magnetic disk(s), memory chip(s), ROM, random-access memory (RAM), an ASIC, a configured processor, optical storage, or any other medium from which a computer processor can read the instructions.

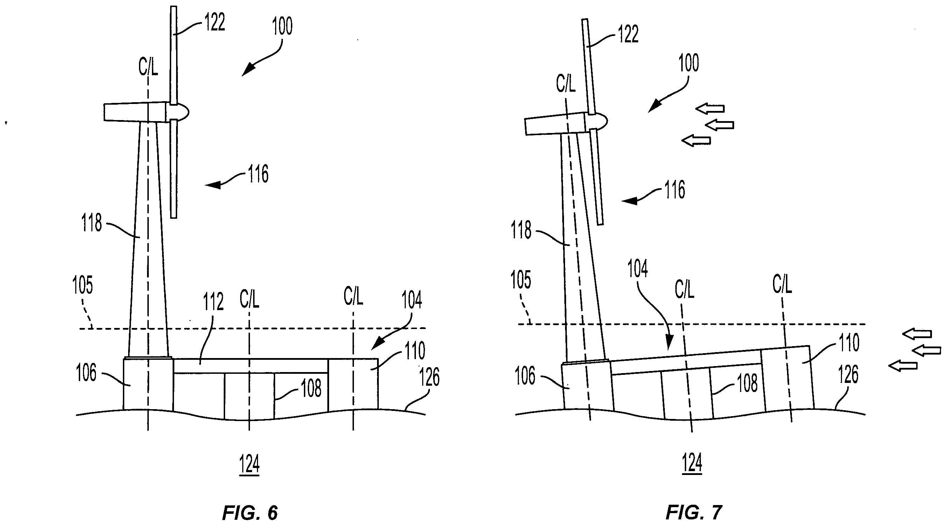

FIGS. 6-7 respectively depict the floating wind turbine 100 and associated floatable structure 104 of FIG. 1 in various floating orientations relative to the body of water 124 in which the floating wind turbine 100 has been deployed. As explained above, when floating in the body of water 124, a portion of the floatable structure 104 is submerged below the surface 126 of the body of water 124. Therefore, the pontoons 114 and portions of the semisubmersible columns 106, 108, 110 of the floatable structure 104 shown in FIG. 1 are not visible in FIGS. 6-7.

FIG. 6 is an elevation view of the floating wind turbine platform of FIG. 1 schematically depicting a level orientation within a body of water. In FIG. 6, the floating wind turbine 100 is in a level (non-inclined) floating orientation, which is aligned with a horizontal reference plane 105 normal to the direction of gravity. The center lines C/L of the wind turbine tower 118 and the semisubmersible columns 106, 108, 110 of the floatable structure 104 are thus all substantially vertically oriented and aligned with the force of gravity. The semisubmersible columns 106, 108, 110 of the floatable structure 104 may also be observed to have substantially the same submerged depth. This orientation of the floatable structure 104 allows the rotor blade 122 of the wind turbine 116 to rotate within a vertical plane, which can maximize the rotational efficiency of the rotor blade 122 and the output of a wind turbine generator driven by the rotor blade 122.

FIG. 7 is an elevation view of the floating wind turbine platform of FIG. 1 schematically depicting the floating wind turbine of FIG. 1 an inclined orientation within the body of water. In FIG. 7, the floating wind turbine 100 is thus depicted in a non-level (inclined) floating orientation, i.e., tilted with respect to the horizontal reference plane 105, which tilt has been exaggerated for purposes of illustration. As represented in FIG. 7, the tilted/inclined orientation of the floatable structure 104 and the overall floating wind turbine 100 may be caused, for example, by an imbalance on the net force distribution on the platform, such as wind forces acting on the wind turbine 116 and the floatable structure 104. In this particular example, the wind forces are directed from right-to-left (as indicated by the arrows). Consequently, the downwind semisubmersible column 106 of the floatable structure 104 is caused to have a greater submerged depth than the upwind semisubmersible column 110, and the centerlines C/L of the wind turbine tower 118 and the semisubmersible columns 106, 108, 110 all deviate leftward from vertical as shown and are not aligned with the force of gravity. Such an inclination can have a negative effect on the operation and efficiency of the rotor blade 122 of the wind turbine 116, which can reduce the output of the wind turbine generator driven by the rotor blade 122.

A ballast distribution system, such as the ballast distribution system 300 of FIG. 3 or the ballast distribution system 500 of FIG. 5, can balance an inclination of the floatable structure 104. In the case of the floating wind turbine inclination scenario presented in FIG. 7, the ballast distribution system 300 can balance the floatable structure 104 by selectively adjusting a position of ballast located within the internal volume of at least one of the submerged pontoons 114. According to another example, the ballast distribution system 500 can balance the floatable structure 104 by selectively transferring ballast between the submerged pontoons 114 (by transferring ballast from one or more of the pontoons 114 to one or more of the other pontoons 114). In either case, the selective transfer of ballast can result in a balancing of the floatable structure 400a and a corresponding return of the centerlines C/L of wind turbine tower 118 and the semisubmersible columns 106, 108, 110 of the floatable structure 104 into proper vertical alignment.

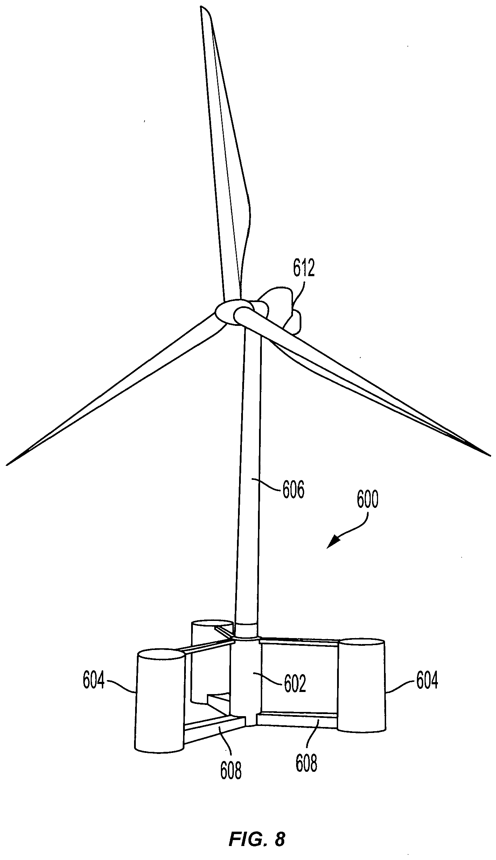

FIG. 8 is a perspective view of a floating wind turbine platform 600 according to yet another example configuration having a central column 602 and pontoons 608 extending radially outwardly from the central column 602 in a spoke-like pattern. Three pontoons 608 are shown by way of example in FIG. 8, but any other suitable number of pontoons may be used. A semisubmersible column 604 is also included at a radially outer end of each pontoon 608. A tower 606 for supporting a turbine 612 extends upwardly from the central column 602. The central positioning of the tower 606 may provide a more balanced platform weight distribution as compared with other examples disclosed herein.

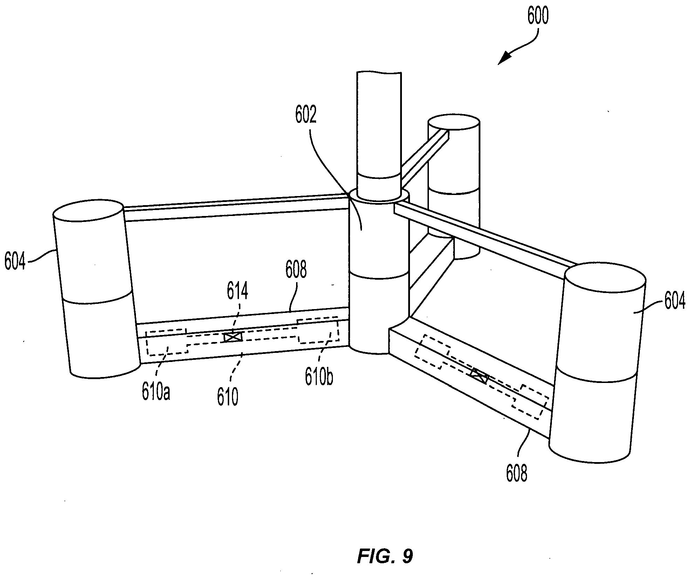

FIG. 9 is an enlarged, perspective view of the platform 600 of FIG. 8. The platform 600 may incorporate features of a ballast distribution system having elements similar to those of foregoing examples. For example, as is schematically illustrated, each pontoon 608 may have an internal volume 610 that includes a pair of ballast compartments 610a, 610b, along with fluid control members such as pumps or valve(s) 614 for controlling a flow of ballast between the ballast compartments 610a, 610b of a particular pontoon 608 and/or a flow of ballast from one pontoon 608 to one or more other pontoons 608, optionally bypassing any of the columns 602, 604.

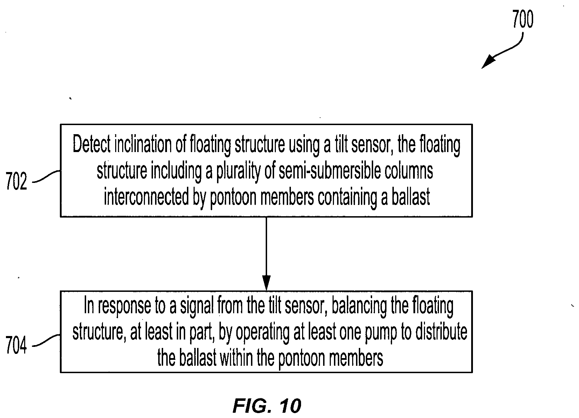

FIG. 10 is a flowchart 700 representing a method of balancing a floating structure that is deployed in a body of water. The floating structure may be a component of a floating wind turbine platform.

As represented at block 702 of FIG. 10, a tilt sensor can be used to detect an inclination of the floating structure. The tilt sensor may be a component of a ballast distribution system associated with the floating wind turbine platform. The tilt sensor may be, for example, a gyroscope, an accelerometer, or an inclinometer. As further indicated in block 702, the floating structure may include a number of semisubmersible columns interconnected by pontoons containing ballast. More specifically, the floating structure may include multiple semisubmersible columns and multiple pontoons that interconnect the semisubmersible columns. The pontoons can each define an internal volume for providing buoyancy to the floatable structure. A ballast may be contained within the internal volumes of the pontoons. In one example, the floating structure may include a generally triangular-shaped platform with three of the semisubmersible columns each defining a vertex of the generally triangular shaped platform.

At block 704, the floating structure may be balanced in response to a signal from the tilt sensor. In some examples, the signal from the tilt sensor may indicate only a direction of inclination of the floating structure . In other examples, the signal from the tilt sensor may indicate a direction and a magnitude of the inclination. It is also possible that a signal will be sent only if a detected inclination of the floating structure exceeds some predetermined and preset threshold value.

As further indicated in block 704, balancing of the floating structure can be accomplished, at least in part, by operating the at least one pump to distribute the ballast within the pontoons in response to a signal from the tilt sensor. The pump(s) may be operated by a controller, such as a controller of the aforementioned ballast distribution system. The controller can be communicatively coupled to the tilt sensor. The controller may have a processor and a memory. The memory can also include instructions that are executable by the processor for causing the processor to perform operations associated with balancing the floating structure, such as operating the pump(s).

In some examples, the internal volumes of the pontoons of the floating platform may be in fluid communication with each other. For example, ballast transfer conduits may form fluid transfer paths between the internal volumes of the pontoons while also bypassing the internal volumes of the semisubmersible columns. In examples where the internal volumes of the pontoons of the floating platform are in fluid communication with each other, distributing the ballast within the pontoons may include transferring at least some of the ballast between the internal volumes of the pontoons.

At least one pump that is in fluid communication with the internal volumes of the pontoons can be used to transfer ballast between the internal volumes of pontoons. In some examples, the at least one pump can be multiple pumps. For example, ballast transfer pumps can be located within the internal volumes of multiple pontoons or within the internal volumes of multiple ballast transfer ducts. Controllable ballast transfer valves may also be located within the internal volumes of multiple pontoon or within the internal volumes of multiple ballast transfer ducts along with the pumps. The controllable ballast transfer valves can be used in conjunction with associated pumps to selectively direct a transfer of ballast between the pontoons.

A single pump that is in fluid communication with the pontoons can be used to transfer ballast between the internal volumes of the pontoons in other examples. For example, a single pump can be placed in fluid communication with multiple controllable ballast transfer valves associated with or located in the pontoons or the ballast transfer ducts. The controllable ballast transfer valves may be directional valves. Selective activation or deactivation of particular ones of the controllable ballast transfer valves can enable use of a single pump to transfer ballast between the pontoons in the manner described in more detail above.

In some examples, the internal volumes of the pontoons may be sealed volumes containing a captive amount of the ballast. When the internal volumes of the pontoons are sealed volumes, there is no fluid communication between the pontoons. Likewise, there is no fluid communication between the pontoons and the semisubmersible columns. In such an example, distributing the ballast within the pontoons can include adjusting the location of at least some of the ballast within the internal volume of one or both of the pontoons.

In examples where the internal volumes of the pontoons are sealed volumes, a pair of ballast compartments may be located within the internal volume of the pontoons and may containing the ballast. A first ballast compartment of the pair of ballast compartments may be located at or near a first end of a given pontoon and a second ballast compartment of the pair of ballast compartments may be located at or near an opposite, second end of the pontoon. The location of ballast within a pontoon may be adjusted by selectively transferring some amount of the ballast from one of the ballast compartments to the other, such as via a ballast transfer conduit.

At least one pump that is in fluid communication with the ballast compartments of a pontoon can be used to transfer ballast between the ballast compartments. In some examples, the at least one pump can be multiple pumps. For example, each of the pontoons may have a pump located within its internal volume and in fluid communication with the ballast compartments residing therein. Controllable ballast transfer valves may also be located within the internal volumes of the pontoons, and may be operated in conjunction with the pump(s) to facilitate selective transfer of ballast between the ballast compartments.

A single pump that is in fluid communication with the pontoons can instead be used to transfer ballast between the internal volumes of the pontoons in other examples. For example, a single pump can be placed in fluid communication with multiple controllable ballast transfer valves associated with or located in the pontoons. The controllable ballast transfer valves may be directional valves. Selective activation or deactivation of particular ones of the controllable ballast transfer valves can enable use of a single pump to transfer at least some of the ballast from the first ballast compartment to the second ballast compartment, or vice versa. In one example, the single pump may be located externally to the internal volumes of the pontoons, may be in fluid communication with the ballast compartments and controllable ballast transfer valves located within the internal volumes of the pontoons via distributed conduits.

While various types of pumps are disclosed herein relative to describing the system examples presented in the drawing figures, it is to be understood that neither the system examples present herein nor other system examples are limited to any particular type of pump. Rather, the term pump as used herein is intended to include any device that can raise, transfer, deliver, or compress fluids, such as by suction, by pressure, or by both.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A floating wind turbine platform comprising:
a floatable structure deployable in a body of water, the floatable structure including one or more semisubmersible columns and a plurality of pontoons providing buoyancy to the floatable structure, each pontoon defining an internal volume for receiving a ballast; and
a ballast distribution system comprising fluid control members controllable for directing a flow of the ballast within the pontoons, a sensor for generating a signal responsive to an inclination of the floatable structure, and a controller in communication with the fluid control members to selectively redistribute the ballast among the pontoons in response to the signal, and wherein the controller is configured for redistributing the ballast from one of the pontoons to one or more other of the pontoons in response to the signal from the sensor; optionally, further comprising one or more bypass conduits for bypassing the one or more semisubmersible columns when transferring the ballast between the pontoons.

2. The floating wind turbine platform of claim 1, wherein the floatable structure comprises a triangular-shaped platform including three of the semisubmersible columns interconnected by the pontoons, each semisubmersible column defining a vertex of the triangular-shaped platform.

3. The floating wind turbine platform of claim 1, wherein the one or more semisubmersible columns comprises a central column having a plurality of the pontoons radially extending therefrom.

4. The floating wind turbine platform of claim 1, wherein at least one of the pontoons comprises spaced apart ballast compartments, and wherein the ballast distribution system is configured to redistribute the ballast among the spaced apart ballast compartments in response to the signal from the sensor; optionally, wherein each pontoon comprises two or more of the spaced apart ballast compartments, and wherein the ballast distribution system is configured to independently redistribute the ballast among the ballast compartments of each of the pontoons in response to the signal from the sensor, or optionally wherein the controller is configured to selectively redistribute the ballast from one of the pontoons to one or more other of the pontoons in response to the signal from the sensor, in combination with redistributing the ballast among the spaced apart ballast compartments of each of the pontoons.

5. The floating wind turbine platform of claim 4, further comprising:
a ballast transfer conduit fluidly coupling the spaced apart ballast compartments within one of the pontoons.

6. The floating wind turbine platform of claim 1, wherein the controller is configured to determine a time-averaged tilt from the signal and redistributes the ballast in response to the time-averaged tilt; or wherein the controller is configured to dynamically redistribute the ballast to maintain the floatable structure within a predefined range of tilt.

7. A method of balancing a floating platform deployed in a body of water on pontoons providing buoyancy to the floating platform, the method comprising:
generating, by a sensor, a signal responsive to an inclination of the floating platform; and
selectively redistributing a ballast among internal volumes defined by the pontoons to maintain the floating platform within a predefined range of inclination.

8. The method of claim 7, wherein redistributing the ballast among internal volumes defined by the pontoons comprises redistributing the ballast from one of the pontoons to one or more other of the pontoons in response to the signal from the sensor.

9. The method of claim 8, further comprising bypassing one or more semisubmersible columns to which the pontoons are mechanically coupled when redistributing the ballast from one of the pontoons to one or more other of the pontoons.

10. The method of claim 7, wherein redistributing the ballast among the internal volumes defined by the pontoons comprises transferring ballast between spaced apart ballast compartments within one of the pontoons.

11. The method of claim 10, wherein all of the pontoons comprise the spaced apart ballast compartments, and wherein redistributing the ballast among the internal volumes defined by the pontoons comprises independently redistributing the ballast among the ballast compartments of each of the pontoons in response to the signal from the sensor.

12. The method of claim 10, wherein redistributing the ballast among the internal volumes defined by the pontoons comprises redistributing the ballast from one of the pontoons to one or more other of the pontoons in combination with redistributing the ballast among the spaced apart ballast compartments of each of the pontoons.

13. The method of claim 7, further comprising determining a time-averaged tilt from the signal from the sensor and redistributing the ballast in response to the time-averaged tilt.

14. The method of claim 7, wherein selectively redistributing the ballast comprises dynamically redistributing the ballast to maintain the floating platform within a predefined range of tilt.

15. A ballast distribution system for a floating platform, the ballast distribution system comprising:
a pump for driving a flow of ballast within pontoons of the floating platform;
one or more fluid control members fluidly coupled to the pump and controllable for directing the flow of the ballast within the floating platform;
a sensor securable to the floating platform for generating a signal responsive to an inclination of the floating platform in a body of water; and
a controller in communication with the fluid control members to selectively redistribute the ballast among the pontoons in response to the signal.
